(19) 

**Europäisches Patentamt**
**European Patent Office**
**Office européen des brevets**

(11) **EP 2 562 588 B1**

(12) **EUROPEAN PATENT SPECIFICATION**

(45) Date of publication and mention
of the grant of the patent:
**10.10.2018 Bulletin 2018/41**

(51) Int Cl.:
*G02F 1/1335* (2006.01)      *G02F 1/1347* (2006.01)
*G02F 1/19* (2006.01)

(21) Application number: **12181402.4**

(22) Date of filing: **22.08.2012**

(54) **Colour image panel comprising a tunable photonic-crystal colour filter and a method of displaying colour images**

Farbbildtafel, umfassend ein abstimmbares Farbfilter, das auf einem photonischen Kristall beruht, und Verfahren zum Anzeigen von Farbbildern

Panneau d'image couleur comprenant un filtre coloré accordable utilisant un cristal photonique et procédé d'affichage d'images couleur

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.08.2011 KR 20110084819**

(43) Date of publication of application:
**27.02.2013 Bulletin 2013/09**

(73) Proprietor: **Samsung Electronics Co., Ltd.**
**Suwon-si, Gyeonggi-do, 443-742 (KR)**

(72) Inventors:
• **Shin, Chang-gyun**
**Gyeonggi-do 449-712 (KR)**
• **Han, Moon-gyu**
**Gyeonggi-do 449-712 (KR)**
• **Shim, Hong-shik**
**Gyeonggi-do 449-712 (KR)**
• **Jeon, Seog-jin**
**Gyeonggi-do 449-712 (KR)**

(74) Representative: **Portch, Daniel**
**Elkington and Fife LLP**
**Prospect House**
**8 Pembroke Road**
**Sevenoaks, Kent TN13 1XR (GB)**

(56) References cited:
**WO-A1-2009/060166      US-A- 5 452 113**

## Description

FIELD OF THE INVENTION

Example embodiments relate to color image panels and/or apparatuses and/or methods of displaying a color image using the color image panels, and for example, to reflection type color image panels using tunable photonic crystal and/or apparatuses and/or methods of displaying a color image using the reflection type color image panels.

BACKGROUND OF THE INVENTION

Color image display devices that display color images generally include an image panel that displays a gray scale of an image and a color filter that provides color to the image. General color image panels employ a color filter in which an area of each of pixels that constitute an image is divided into three fixed colors and light is transmitted or reflected from the color area. In such area-divided color filters, when a primary color or a color approximating the primary color is displayed, light that is transmitted from the remaining color areas is fully blocked resulting in a large amount of color loss.

In addition, absorption type color filters that are generally used in general color image panels transmit only light in a desired color area and absorb light in the remaining color areas. Thus, in general color image panels, loss of light that occurs when light is transmitted via an absorption color filter is large. Also, when an absorption type color filter is used in reflection type color image panels, due to characteristics of the reflection type color image panels, light passes through the absorption type color filter twice, and thus, the loss of light in the absorption type color filter is doubly increased, and it is more difficult to display a bright color.

Thus, as an alternative to absorption type color filters, color filters using photonic crystal in which light is fully reflected from a color area corresponding to a photonic band gap and light in the remaining color areas is transmitted, are being studied. However, suggested color filters using photonic crystal use a three primary color display principle so as to display all colors in a color coordinate space that can be still recognized by a human being.

International Patent Application Publication Number WO 2009/060166 A1 relates to a colour image panel comprising a tunable photonic crystal and presents a method of controlling particle spacing of a regular lattice of substantially monodisperse particles in a solution-based photonic crystal.

United States Patent Number US 5,452,113 discloses a color display element in which light-scattering and transparent states can be controlled by an external electric field.

SUMMARY OF THE INVENTION

Example embodiments relate to color image panels and/or apparatuses and/or methods of displaying a color image using the color image panels Additional aspects will be set forth in part in the description which follows and, in part, will be apparent from the description, or may be learned by practice of example embodiments.

According to an aspect of the invention, there is provided a color image panel according to claim 1.

A photonic bandgap of the tunable photonic crystal filter may be tuned when at least one of a shape, volume, and effective refractive index of photonic crystal is varied by using an electrical or mechanic stimulus controlled by the controller. For example, the tunable photonic crystal filter may include a photonic crystal layer in which charged colloid particles are dispersed in a solvent, and an electrode that applies a voltage to the photonic crystal layer.

The reflection plate may include a white reflection plate.

According to another aspect of the invention, there is provided a method of displaying a color image according claim 6.

In a color image panel and an apparatus and a method of displaying a color image using the color image panel according to example embodiments, bright color that cannot be represented by a general color filter may be represented, and the loss of light that is doubly increased in an absorption type color filter may be reduced (and/or prevented), and the loss of light in a general color display method using area-division may be reduced (and/or prevented).

Embodiments may represent colors from a perfectly bright white color that cannot be represented using a general area-division method, up to perfect black.

Also, embodiments may represent a mixed color as a mixture of pure color and white color, thus enabling a greatly simplified algorithm.

Embodiments may be used in a display device, such as an e-book or a car navigation device in an outdoor environment, or as a display device having low power consumption, such as an indoor or outdoor advertising board.

BRIEF DESCRIPTION OF THE EMBODIMENTS

These and/or other aspects will become apparent and more readily appreciated from the following description of non-limiting embodiments, as illustrated in the accompanying drawings in which like reference characters refer to the same parts throughout the different views. The drawings are not necessarily to scale, emphasis instead being placed upon illustrating the principles of inventive concepts. In the drawings:

FIG. 1 schematically illustrates a structure of an apparatus for displaying a color image according to example embodiments;

FIG. 2 illustrates an example of a tunable photonic crystal filter that is used in the apparatus for displaying a color image illustrated in FIG. 1;

FIG. 3 illustrates an operation of the tunable photonic crystal filter illustrated in FIG. 2;

FIG. 4 is a graph showing a case where color of light reflected from the tunable photonic crystal filter illustrated in FIG. 2 is tuned according to an applied voltage;

FIG. 5 is a graph showing a case where color of light reflected from the tunable photonic crystal filter illustrated in FIG. 2 is shown in a color coordinate space;

FIG. 6 is a graph showing synthesis of color displayed by the apparatus for displaying a color image illustrated in FIG. 1;

FIG. 7 illustrates a principle of color synthesis performed by a reflection type apparatus for displaying a color image according to a comparative example;

FIG. 8 illustrates a principle of color synthesis performed by the apparatus for displaying a color image illustrated in FIG. 1, according to example embodiments; and

FIG. 9 is a graph showing brightness characteristics of the apparatus for displaying a color image illustrated in FIG. 1.

DETAILED DESCRIPTION OF THE DRAWINGS

Example embodiments will now be described more fully with reference to the accompanying drawings, in which some example embodiments are shown. Example embodiments, may, however, be embodied in many different forms and should not be construed as being limited to the embodiments set forth herein; rather, these example embodiments are provided so that this disclosure will be thorough and complete, and will fully convey the scope of example embodiments of inventive concepts to those of ordinary skill in the art. In the drawings, the thicknesses of layers and regions are exaggerated for clarity. Like reference numerals in the drawings denote like elements, and thus their description may be omitted.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. As used herein the term "and/or" includes any and all combinations of one or more of the associated listed items. Other words used to describe the relationship between elements or layers should be interpreted in a like fashion (e.g., "between" versus "directly between," "adjacent" versus "directly adjacent," "on" versus "directly on"). Expressions such as "at least one of," when preceding a list of elements, modify the entire list of elements and do not modify the individual elements of the list.

It will be understood that, although the terms "first", "second", etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed below could be termed a second element, component, region, layer or section without departing from the teachings of example embodiments.

Spatially relative terms, such as "beneath," "below," "lower," "above," "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the exemplary term "below" can encompass both an orientation of above and below. The device may be otherwise oriented (rotated 90 degrees or at other orientations) and the spatially relative descriptors used herein interpreted accordingly.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises", "comprising", "includes" and/or "including," if used herein, specify the presence of stated features, integers, steps, operations, elements and/or components, but do not preclude the presence or addition of one or more other features, integers, steps, operations, elements, components and/or groups thereof.

Example embodiments are described herein with reference to cross-sectional illustrations that are schematic illustrations of idealized embodiments (and intermediate structures) of example embodiments. As such, variations from the shapes of the illustrations as a result, for example, of manufacturing techniques and/or tolerances, are to be expected.

Unless otherwise defined, all terms (including technical and scientific terms) used herein have the same meaning as commonly understood by one of ordinary skill in the art to which example embodiments belong. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

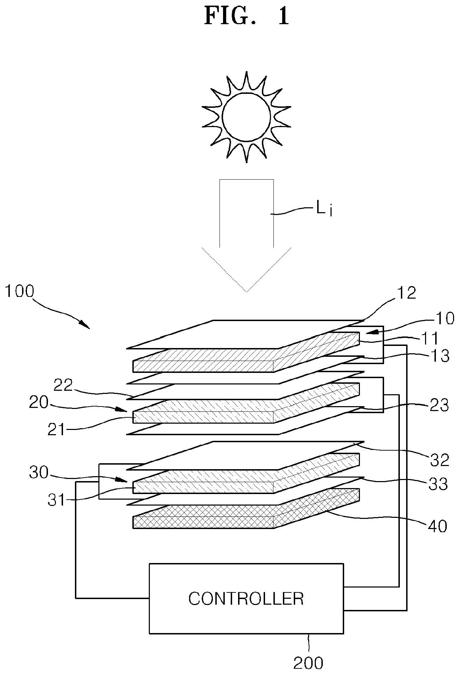

FIG. 1 schematically illustrates a structure of an apparatus for displaying a color image according to example embodiments.

Referring to FIG. 1, an apparatus for displaying a color image according to example embodiments includes a color image panel 100 and a controller 200 that controls the color image panel 100. The color image panel 100 includes a first photonic shutter 10, a tunable photonic crystal filter 20, a second photonic shutter 30, and a reflection plate 40. In FIG. 1, the color image panel illustrated in FIG. 1 includes the first photonic shutter 10, the tunable photonic crystal filter 20, and the second photonic shutter 30 in an area corresponding to one pixel for clarity of illustration.

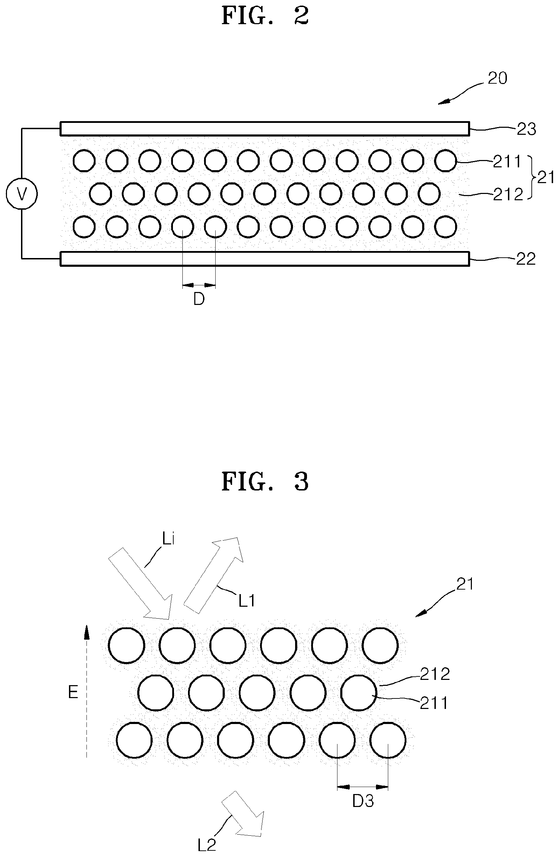

The first photonic shutter 10 tunably controls the amount of light by tuning transmittance of incident external light Li in the range of 0 to 1. The second photonic shutter 30 is disposed on a rear side of the tunable photonic crystal filter 20 and tunably controls the amount of light (L2 of FIG. 3) that passes through the tunable photonic crystal filter 20. The first and second photonic shutters 10 and 30 may include generally used materials for photonic shutters. For example, the first and second photonic shutters 10 and 30 may be polymer dispersion type liquid crystal panels that include polymer dispersion type liquid crystals 11 and 31 and electrodes 12, 13; 32, 33 that apply voltages to the polymer dispersion type liquid crystals 11 and 13. The polymer dispersion type liquid crystal 11 may include the same or different materials, lattice structure form or unit lattice size, as the polymer dispersion type liquid crystal 13.

The reflection plate 40 reflects light that passes through the second photonic shutter 30 back to the second photonic shutter 30. The reflection plate 40 may be a white reflection plate that may reflect light in the visible light spectrum. The reflection plate 40 may be a reflection plate that reflects only a desired (or alternatively predetermined color), if necessary.

The tunable photonic crystal filter 20 is a tunable color filter that modulates color of light reflected by the reflection plate 40 from the external light Li in real-time. The tunable photonic crystal filter 20 may be a tunable photonic crystal device of which a photonic bandgap may be controlled when at least one of the shape, volume, and effective refractive index of a photonic crystal is varied by using an electrical or mechanic stimulus controlled by the controller 200. A basic unit of the photonic bandgap that is controlled by the tunable photonic crystal filter 20 one-to-one corresponds to color pixels that display a color image.

An example of the tunable photonic crystal filter 20 is shown in FIG. 2.

Referring to FIG. 2, the tunable photonic crystal filter 20 may include a tunable photonic crystal layer 21 that may control the photonic bandgap by using an electrical stimulus, and electrodes 22 and 23 that apply a voltage V to the tunable photonic crystal layer 21. The tunable photonic crystal layer 21 may include charged colloid particles 211 and a medium 212 in which the colloid particles 211 are dispersed. The colloid particles 211 are regularly dispersed due to electrokinetic phenomena and have a photonic crystal structure. The photonic bandgap of the tunable photonic crystal layer 21 determines a wavelength band in which light is to be reflected and depends on the sizes of the colloid particles 211 and a distance between the colloid particles 211. Thus, the sizes of the colloid particles 211 may be properly selected according to a wavelength band to be reflected. For example, the colloid particles 211 may have sizes in the range of approximately several tens of nm to several hundreds of nm. For example, the colloid particles 211 may have the size of several hundreds of nm, for example, approximately 300 nm so as to display color in a visible light band.

As another example, the tunable photonic crystal filter 20 may include photonic crystals in which nano particles of a dielectric material having a high-refractive index are distributed in a crystalline shape in a peripheral environment in which the nano particles of the dielectric material swell/deswell due to infiltration of an electrolyte caused by a reversible oxidation-reduction reaction induced by voltage. Also, the tunable photonic crystal filter 20 may include photonic crystals that are encapsulated within a polymer matrix in which a lattice distance is adjusted by physical compression/stretching, or photonic crystals that are encapsulated within a polymer matrix in which the photonic crystals swell/deswell due to temperature, humidity, a chemical stimulus or a biological stimulus.

It may be understood that the first photonic shutter 10, the tunable photonic crystal filter 20, and the second photonic shutter 30 may be a cell that displays one of color pixels that constitute a color image. That is, it may be understood that the first photonic shutter 10, the tunable photonic crystal filter 20, and the second photonic shutter 30 are one cell that is independently controlled by the controller 200 and cells are arranged in a two-dimensional matrix and a color image is displayed in the cells. Meanwhile, a portion of the electrodes 12, 13; 22, 23; and 32, 33 of the first photonic shutter 10, the tunable photonic crystal filter 20, and the second photonic shutter 30 may be commonly used.

As will be described below, it may be understood that the tunable photonic crystal filter 20 displays color by using color pixels and the first photonic shutter 10, the second photonic shutter 30, and the reflection plate 40 are included in a white display unit that represents saturation and brightness of the color pixels.

In FIG. 1, tunable photonic crystal filter 20 and the white display unit may correspond one-to-one to an area corresponding to each of the color pixels for displaying a color image.

Next, the operating principle of the tunable photonic crystal filter 20 will be described with reference to FIGS. 2 and 3.

The colloid particles 211 are dispersed in the medium 212 due to an electrostatic repulsive force. When voltage V is applied to the electrodes 22 and 23, an electric field E is formed in the medium 212, and the colloid particles 211 having an electric double layer are moved in the medium 212 in one direction and are balanced with the electrostatic repulsive force and constitute a lattice structure in which the colloid particles 211 are uniformly dispersed and are arranged with a desired (or alternatively predetermined) lattice distance D therebetween.

The tunable photonic crystal layer 21 having the lattice structure has a photonic bandgap at which light having a desired (or alternatively predetermined) wavelength may be blocked or may be transmitted due to periodic distribution of refractive indices. According to Bragg's law, light having a desired (or alternatively predetermined) wavelength λ that is expressed by the following Equation 1 cannot be transmitted through the tunable photonic crystal layer 21 and is reflected therefrom:

【Equation 1】

$$m\lambda = 2nD \cdot \sin\theta ,$$

where λ is a wavelength of diffracted or reflected light, and n is an effective refractive index of the tunable photonic crystal layer 21, and D is a lattice distance between the colloid particles 211 of the tunable photonic crystal layer 21, and m is an integer.

When the magnitude of the voltage V applied to the electrodes 22 and 23 is varied, the lattice distance D between the colloid particles 211 may be varied because electrostatic repulsive force and balanced state between the colloid particles 211 may change. For example, as shown in FIG. 3, the colloid particles 211 may be spaced apart by a lattice distance D3. The lattice distance D3 may be different than the lattice distance D2 in FIG. 2, based on varying the magnitude of the voltage V applied to the electrodes 22 and 23. Thus, the wavelength λ of the reflected light L1 may be controlled by controlling the voltage V applied to the electrodes 22 and 23.

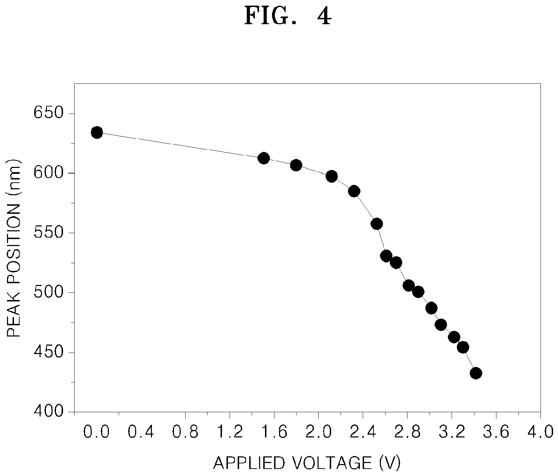

FIG. 4 is a graph showing a case where a peak position of a wavelength band of the light L1 reflected from the tunable photonic crystal filter 21 illustrated in FIG. 2 is tuned according to an applied voltage.

Referring to FIG. 4, as the applied voltage V increases, the wavelength band of the light L1 that is reflected from the tunable photonic crystal layer 21 is moved to a shorter wavelength band and includes all wavelengths in the visible light band.

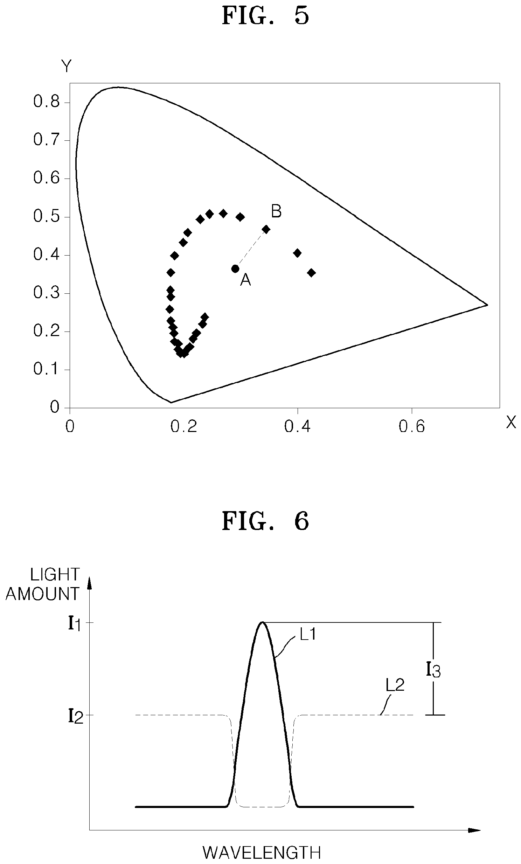

FIG. 5 is a graph showing a case where color of light reflected from the tunable photonic crystal filter illustrated in FIG. 2 is shown in a color coordinate space The color of the reflected light L1 that is tuned according to the applied voltage V may be represented as dots that constitute a color representation curve including at least a portion of a circumference of a center point A in a color coordinate space, as illustrated in FIG. 5. When the applied voltage V is continuously changed, the color of the reflected light L1 will be continuously moved in the color coordinate space. In FIG. 5, the center point A that is located in the center of the color coordinate space represents white. The color representation curve illustrated in FIG. 5 may be varied according to characteristics of the apparatus for displaying a color image illustrated in FIG. 1, such as sizes or the lattice distance D between the colloid particles 211 of the tunable photonic crystal layer 21; however, example embodiments are not limited thereto.

Next, the operation of the apparatus for displaying a color image illustrated in FIG. 1 will be described with reference to FIGS. 1 through 5.

The first photonic shutter 10 controls the amount of the external light Li that is incident from the outside and passes through the first photonic shutter 10. The tunable photonic crystal filter 20 selectively allows first light L1 in a wavelength band that is selected from the external light Li that passes through the first photonic shutter 10 to be reflected from the tunable photonic crystal filter 20 and allows second light L2 in the remaining wavelength bands to be transmitted via the tunable photonic crystal filter 20. The first light L1 that is reflected from the tunable photonic crystal filter 20 re-passes through the first photonic shutter 10 and is emitted to the outside of the color image panel 100. Second light L2 that passes through the tunable photonic crystal filter 20 is reflected from the reflection plate 40 via the second photonic shutter 30 and re-passes through the second photonic shutter 30, the tunable photonic crystal filter 20, and the first photonic shutter 10 sequentially. The light Li that is incident on the color image panel 100 in this manner proceeds towards the first light L1 and the second light L2 along two paths and is emitted to the outside of the color image panel 100.

The first light L1 that is emitted to the outside of the color image panel 100 has a light amount I1 that is controlled when the first light L1 passes through the first photonic shutter 10, and the second light L2 that is emitted to the outside of the color image panel 100 has a light amount I2 that is controlled when the second light L2 passes through both the first and second photonic shutters 10 and 30. Since the first and second photonic shutters 10 and 30 are controlled independently, the light amount I1 of the first light L1 and the light amount I2 of the second light L2 may be controlled independently.

When the wavelength band of the first light L1 and the wavelength band of the second light L2 are added to each other, all of the visible light band are included in the added wavelength bands of the first light L1 and the second light L2. Thus, when the first light L1 and the second light L2 are synthesized with each other, white light having the light amount I2 exists in the visible light band. Meanwhile, light of color corresponding to the wavelength band of the first light L1 has an additional light amount I3. That is, the color image panel 100 displays light that is obtained by synthesizing color light having the light amount I3 and white light having the light amount I2. The light amount I3 corresponds to a difference between the light amount I1 and the light amount I2. Since the second light L2 additionally passes through the second photonic shutter 30 compared to the first light L1, the light amount I2 of the second light L2 is equal to or smaller than the light amount I1 of the first light L1, and thus, the light amount I3 of the color light is equal to zero or has a positive value.

Referring to FIG. 5, color light having the light amount I3 corresponds to points B that are located in the color representation curve, and white light having the light amount I2 corresponds to the center point A. Thus, color that is represented on the color image panel 100 corresponds to one point of a segment that connects the center point A and the points B in the color representation curve. That is, saturation of color that corresponds to an arbitrary point in the segment that connects the center point A representing white and the points B in the color representation curve may be displayed as a mixture of white corresponding to the point A and colors corresponding to the points B. Thus, color that is displayed by the apparatus for displaying a color image illustrated in FIG. 1 may be determined by the tunable photonic crystal filter 20, and saturation of displayed color may be determined by a mixture ratio of the light amount I1 and the light amount I3. Brightness of displayed color may be mainly determined by white light having the light amount I2.

White may be displayed when all of the first and second photonic shutters 10 and 30 and the tunable photonic crystal filter 20 are made transparent. The tunable photonic crystal filter 20 may be transparent with respect to the visible light band by moving a reflection band outside of the visible light band, for example, an infrared band or an ultraviolet (UV) band.

Meanwhile, black may be displayed when the first photonic shutter 10 blocks light fully. Alternatively, black may also be displayed when the first photonic shutter 10 and the tunable photonic crystal filter 20 are made transparent and the second photonic shutter 30 blocks light fully.

Gray that is located between white and black may be displayed when the tunable photonic crystal filter 20 is made transparent for visible light and light transmittance of the first and/or second photonic shutters 10 and 30 is controlled.

The controller 200 controls the tunable photonic crystal filter 20 in each color pixel of an input color image based on color information and controls the first and second photonic shutters 10 and 30 based on brightness information so that the color image panel 100 may represent color and brightness of the color pixel.

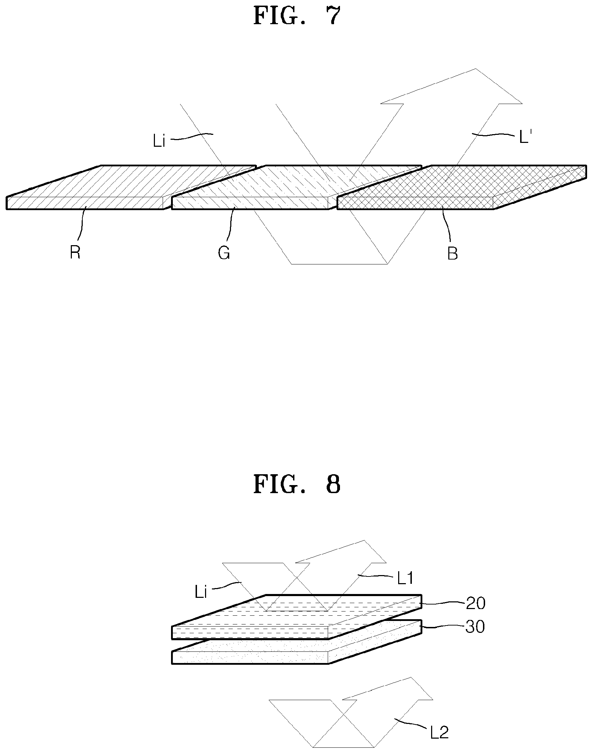

FIG. 7 illustrates a color filter with respect to one pixel in a reflection type apparatus for displaying a color image according to a comparative example and illustrates the principle of color synthesis, and FIG. 8 illustrates the tunable photonic crystal filter 20 with respect to one pixel of the apparatus for displaying a color image illustrated in FIG. 1, according to example embodiments and illustrates the principle of color synthesis.

Referring to FIG. 7, in the reflection type apparatus for displaying a color image that employs an absorption type color filter, the absorption type color filter has a structure in which the area of one pixel is divided into a red area R, a green area G, and a blue area B. Thus, the external light Li is changed to light L' that is synthesized after passing through each of the red area R, the green area G, and the blue area B and displays color in one pixel. Thus, when a primary color or color (for example, red, green or blue) approximating the primary color is displayed, light that passes through the remaining color areas is fully blocked, and a color loss thereof is large. In addition, when a general absorption type color filter is used in the reflection type apparatus for displaying a color image, the rate of loss in the absorption type color filter at which light L' passes through the absorption type color filter twice is squared, and there is a limitation in representing bright color.

On the other hand, referring to FIG. 8, an apparatus for displaying a color image according to example embodiments may reduce light loss. Since color in one pixel is displayed using the color light L1 that is reflected from one tunable photonic crystal filter 20, without dividing the area of one pixel, a problem related to light loss that may occur in a general area-division color display may be reduced (and/or solved). Furthermore, since the light L2 that passes through the tunable photonic crystal filter 20 is re-reflected and is added to the color light L1, a brighter color may be represented, compared to a color represented by a general color filter.

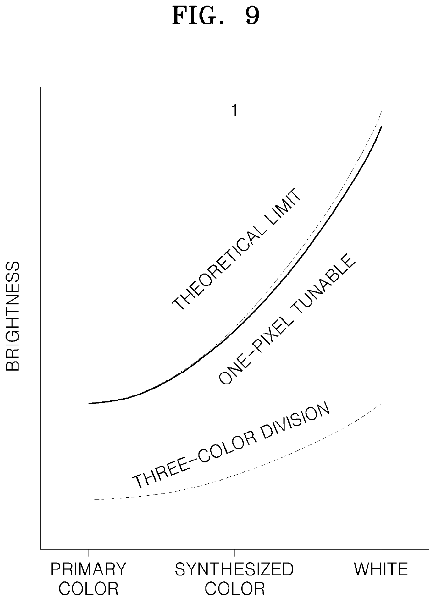

FIG. 9 is a graph showing brightness characteristics of the apparatus for displaying a color image illustrated in FIG. 1. As illustrated in FIG. 9, the light L2 (in FIG. 8) that passes through the tunable photonic crystal filter 20 is used to represent a bright light in a one-pixel tunable method using a tunable photonic crystal color filter according to example embodiments so that brightness of color may be closer to a theoretical limit value, compared to a general three-color division method.

As described above, an apparatus for displaying a color image according to example embodiments may represent colors from a perfectly bright white color that cannot be represented using a general area-division method, up to perfect black. Thus, brightness approximating natural color and a printed material, contrast, and color representation power that are greatly improved compared to the general area-division method may be realized.

In addition, an algorithm for combining primary colors is required to represent a mixed color by using the general area-division method, whereas an apparatus for displaying a color image according to example embodiments represents a mixed color as a mixture of pure color and white color, and thus an algorithm therefor is greatly simplified.

Apparatuses for displaying a color image according to example embodiments, as described above, display a color image using external light and thus may be used in a display device, such as an e-book or a car navigation device in an outdoor environment, or as a display device having low power consumption, such as an indoor or outdoor advertising board.

**Claims**

1. A color image panel (100) comprising:

   pixels configured to display a color image, at least one of the pixels including,
   a tunable photonic crystal filter (20) configured to reflect light in a wavelength band of a selected color and to transmit light in a wavelength band other than the wavelength band of the selected color, based on a stimulus controlling a photonic bandgap of the tunable photonic crystal filter; and
   a saturation and brightness control unit configured to control saturation and brightness of color light in a wavelength band reflected by the tunable photonic crystal filter by controlling transmission and reflection of external light that is incident on the color image panel; and
   a controller (200) configured to control the tunable photonic crystal filter and the saturation and brightness control unit, wherein the saturation and brightness control unit comprises:

      a first shutter (10) on a front side of the tunable photonic crystal filter,
      the first shutter being configured to tunably control an amount of external light that is incident on the tunable photonic crystal filter from outside;
      a second shutter (30) on a rear side of the tunable photonic crystal filter, the second shutter being configured to tunably control an amount of light that passes through the second shutter; and
      a reflection plate (40) that is configured to reflect light that passes through the second shutter back to the second shutter.

2. The color image panel of claim 1, wherein the reflection plate is a white reflection plate.

3. The color image panel of any preceding claim, wherein the stimulus varies at least one of a shape and a volume of photonic crystals in the tunable photonic crystal layer, the stimulus including at least one of an electrical and a mechanical stimulus.

4. The color image panel of claim 3, wherein the tunable photonic crystal filter comprises:

   a photonic crystal layer containing charged colloid particles dispersed in a solvent, and electrodes configured to apply a voltage to the photonic crystal layer.

5. An apparatus for displaying a color image, comprising a color image panel according to any preceding claim.

6. A method of displaying a color image using a color image panel (100) comprising pixels configured to display the color image, at least one of the pixels including a tunable photonic crystal filter (20) configured to reflect light in a wavelength band of selected color and to transmit light in a wavelength band other than the wavelength band of the selected color, and a saturation and brightness control unit configured to control saturation and brightness of color light in a wavelength band reflected by the tunable photonic crystal filter by controlling transmission and reflection of external light that is incident on the color image panel, and a controller (200) configured to control the tunable photonic crystal filter and the saturation and brightness control unit, the method comprising:

   controlling a stimulus applied to the tunable photonic crystal filter to control color of the pixels that constitute the color image; and
   controlling the saturation and brightness control unit to control saturation and brightness of the color pixels that constitute the color image, wherein the saturation and brightness control unit comprises a first shutter on a front side of the tunable photonic crystal filter, a second shutter that on a rear side of the tunable photonic crystal filter, and a reflection plate, and wherein the method further comprises:

      controlling the first shutter to tunably control an amount of external light that is incident on the tunable photonic crystal filter from outside;
      controlling the second shutter to tunably control an amount of light that passes through the second shutter; and
      reflecting light that passes through the second shutter back to the second shutter by using the reflection plate.

7. The method of claim 6, wherein the reflection plate is a white reflection plate.

8. The method of any of claims 6 to 7, wherein a photonic bandgap of the tunable photonic crystal filter is tuned when at least one of a shape and volume of photonic crystal is varied by using an electrical or mechanic stimulus controlled by the controller.

9. The method of claim 7 or 8, wherein the tunable photonic crystal filter comprises:

a photonic crystal layer containing charged colloid particles dispersed in a solvent, and electrodes configured to apply a voltage to the photonic crystal layer.

**Patentansprüche**

1. Farbbildschirm (100), der umfasst:

Pixel, die konfiguriert werden, um ein Farbbild anzuzeigen, wobei mindestens eines der Pixel ein abstimmbares photonisches Kristallfilter (20) aufweist, das konfiguriert wird, Licht in einem Wellenlängenband einer ausgewählten Farbe zu reflektieren und Licht auf Grundlage eines Reizes, der einen photonischen Bandabstand des abstimmbaren photonischen Kristallfilters steuert, in einem anderen Wellenlängenband als dem Wellenlängenband der ausgewählten Farbe zu übertragen; und eine Sättigungs- und Helligkeitssteuereinheit, die konfiguriert wird, Sättigung und Helligkeit von durch das abstimmbare photonische Kristallfilter reflektiertes Farblicht in einem Wellenlängenband durch Steuern von Übertragung und Reflexion von externem Licht, das auf den Farbbildschirm einfällt, zu steuern; und eine Steuerung (200), die konfiguriert wird, das abstimmbare photonische Kristallfilter und die Sättigungs- und Helligkeitssteuereinheit zu steuern, wobei die Sättigungs- und Helligkeitssteuereinheit umfasst:

einen ersten Verschluss (10) auf einer Vorderseite des abstimmbaren photonischen Kristallfilters, wobei der erste Verschluss konfiguriert wird, um eine Menge von externem Licht abstimmbar zu steuern, das auf das abstimmbare photonische Kristallfilter von außerhalb einfällt; einen zweiten Verschluss (30) auf einer Rückseite des abstimmbaren photonischen Kristallfilters, wobei der zweite Verschluss konfiguriert wird, um eine Menge von Licht abstimmbar zu steuern, das durch den zweiten Verschluss hindurchgeht; und eine Reflexionsplatte (40), die konfiguriert wird, um Licht zu reflektieren, das durch den zweiten Verschluss zurück zu dem zweiten Verschluss läuft.

2. Farbbildschirm nach Anspruch 1, wobei die Reflexionsplatte eine weiße Reflexionsplatte ist.

3. Farbbildschirm nach einem vorhergehenden Anspruch, wobei der Reiz mindestens entweder eine Form oder eine Menge von photonischen Kristallen in der abstimmbaren photonischen Kristallschicht variiert, wobei der Reiz mindestens entweder einen elektrischen oder einen mechanischen Reiz aufweist.

4. Farbbildschirm nach Anspruch 3, wobei das abstimmbare photonische Kristallfilter umfasst: eine photonische Kristallschicht, die in einem Lösungsmittel verteilte geladene Kolloidteilchen und Elektroden enthält, die konfiguriert werden, eine Spannung an die photonische Kristallschicht anzulegen.

5. Vorrichtung zum Anzeigen eines Farbbilds, die einen Farbbildschirm nach einem vorhergehenden Anspruch umfasst.

6. Verfahren zum Anzeigen eines Farbbilds durch Verwenden eines Farbbildschirms (100), der Pixel umfasst, die konfiguriert werden, um das Farbbild anzuzeigen, wobei mindestens eines der Pixel ein abstimmbares photonisches Kristallfilter (20) aufweist, das konfiguriert wird, um Licht in einem Wellenlängenband von ausgewählter Farbe zu reflektieren und Licht in einem anderen Wellenlängenband als dem Wellenlängenband der ausgewählten Farbe zu übertragen, und eine Sättigungs- und Helligkeitssteuereinheit, die konfiguriert wird, Sättigung und Helligkeit von Farblicht, das durch das abstimmbare photonische Kristallfilter reflektiert wird, in einem Wellenlängenband durch Steuern von Übertragung und Reflexion von externem Licht, das auf den Farbbildschirm einfällt, zu steuern und eine Steuerung (200), die konfiguriert wird, das abstimmbare photonische Kristallfilter und die Sättigungs- und Helligkeitssteuereinheit zu steuern, wobei das Verfahren umfasst:

Steuern eines Reizes, der auf das abstimmbare photonische Kristallfilter angewendet wird, um eine Farbe der Pixel zu steuern, die das Farbbild bilden; und Steuern der Sättigungs- und Helligkeitssteuereinheit, um Sättigung und Helligkeit der Farbpixel zu steuern, die das Farbbild bilden, wobei die Sättigungs- und Helligkeitssteuereinheit einen ersten Verschluss auf einer Vorderseite des abstimmbaren photonischen Kristallfilters, einen zweiten Verschluss auf einer Rückseite des abstimmbaren photonischen Kristallfilters und eine Reflexionsplatte umfasst, und wobei das Verfahren des Weiteren umfasst:

Steuern des ersten Verschlusses, um eine Menge von externem Licht abstimmbar zu steuern, das auf das abstimmbare photonische Kristallfilter von außerhalb einfällt;
Steuern des zweiten Verschlusses, um eine Menge von Licht abstimmbar zu steuern, das durch den zweiten Verschluss verläuft; und
Reflektieren von Licht, das durch Verwenden der Reflexionsplatte durch den zweiten Verschluss zurück zu dem zweiten Verschluss verläuft.

7. Verfahren nach Anspruch 6, wobei die Reflexionsplatte eine weiße Reflexionsplatte ist.

8. Verfahren nach einem der Ansprüche 6 bis 7, wobei ein photonischer Bandabstand des abstimmbaren photonischen Kristallfilters abgestimmt wird, wenn mindestens entweder eine Form oder Menge von photonischem Kristall durch Verwenden eines durch die Steuerung gesteuerten elektrischen oder mechanischen Reizes variiert wird.

9. Verfahren nach Anspruch 7 oder 8, wobei das abstimmbare photonische Kristallfilter umfasst:
eine photonische Kristallschicht, die in einem Lösungsmittel verteilte geladene Kolloidteilchen und Elektroden enthält, die konfiguriert werden, eine Spannung an die photonische Kristallschicht anzulegen.

**Revendications**

1. Panneau d'image couleur (100) comprenant :

des pixels conçus pour afficher une image couleur, au moins l'un des pixels comportant :

un filtre accordable (20) utilisant un cristal photonique conçu pour réfléchir la lumière dans une bande de longueur d'onde d'une couleur choisie et pour transmettre la lumière dans une bande de longueur différente de la bande de longueur d'onde de la couleur choisie, en fonction d'un stimulus contrôlant une bande interdite photonique du filtre accordable utilisant un cristal photonique ; et
une unité de commande de saturation et de luminosité conçue pour commander la saturation et la luminosité de la lumière colorée dans une bande de longueur d'onde réfléchie par le filtre accordable utilisant un cristal photonique en contrôlant la transmission et la réflexion de la lumière externe qui est incidente sur l'écran d'image en couleur ; et

un dispositif de commande (200) conçu pour commander le filtre accordable utilisant un cristal photonique et l'unité de commande de saturation et de luminosité, ladite unité de commande de saturation et de luminosité comprenant :

un premier obturateur (10) sur un côté avant du filtre accordable utilisant un cristal photonique, ledit premier obturateur étant conçu pour réguler de manière accordable la quantité de lumière externe qui est incidente sur le filtre accordable utilisant un cristal photonique depuis l'extérieur ;
un second obturateur (30) sur un côté arrière du filtre accordable utilisant un cristal photonique, le second obturateur étant conçu pour réguler de manière accordable la quantité de lumière qui traverse le second obturateur ; et
une plaque de réflexion (40) qui est conçue pour réfléchir la lumière qui traverse le second obturateur de retour vers le second obturateur.

2. Panneau d'image couleur selon la revendication 1, ladite plaque de réflexion étant une plaque de réflexion blanche.

3. Panneau d'image couleur selon l'une quelconque des revendications précédentes, ledit stimulus modifiant au moins un élément parmi la forme et le volume des cristaux photoniques dans la couche accordable utilisant un cristal photonique, le stimulus comportant au moins un stimulus parmi un stimulus électrique et un stimulus mécanique.

4. Panneau d'image couleur selon la revendication 3, ledit filtre accordable utilisant un cristal photonique comprenant :

une couche de cristaux photoniques contenant des particules colloïdales chargées dispersées dans un solvant, et
des électrodes conçues pour appliquer une tension à la couche de cristaux photonique.

5. Appareil d'affichage d'une image couleur, comprenant un panneau d'image couleur selon l'une quelconque des revendications précédentes.

6. Procédé d'affichage d'une image couleur à l'aide d'un panneau d'image couleur (100) comprenant des pixels conçu pour afficher l'image couleur, au moins l'un des pixels comportant un filtre accordable utilisant un cristal photonique (20) conçu pour réfléchir la lumière dans une bande de longueur d'onde de couleur choisie et pour transmettre la lumière dans une bande de longueur d'onde différente de la bande de longueur d'onde de la lumière choisie, et une unité de commande de saturation et de luminosité conçue pour commander la saturation et la luminosité de la lumière colorée dans une bande de longueur d'onde réfléchie par le filtre accordable utilisant un cristal photonique en contrôlant la transmission et la réflexion de la lumière externe qui est incidente sur le panneau d'image couleur, et un dispositif de commande (200) conçu pour commander le filtre accordable utilisant un cristal photonique et l'unité de commande de saturation et de luminosité, le procédé comprenant :

la commande d'un stimulus appliqué au filtre accordable utilisant un cristal photonique pour contrôler la couleur des pixels qui constituent l'image couleur ; et
la commande de l'unité de commande de la saturation et de la luminosité pour commander la saturation et la luminosité des pixels de couleur qui constituent l'image couleur, ladite unité de commande de la saturation et de la luminosité comprenant un premier obturateur sur un côté avant du filtre accordable utilisant un cristal photonique, un second obturateur qui se trouve sur un côté arrière du filtre accordable utilisant un cristal photonique, et une plaque de réflexion, et ledit procédé comprenant en outre :

la commande du premier obturateur pour contrôler de manière accordable la quantité de lumière externe qui est incidente sur le filtre accordable utilisant un cristal photonique depuis l'extérieur ;
la commande du second obturateur pour contrôler de manière accordable la quantité de lumière qui traverse le second obturateur ; et
la réflexion de la lumière qui traverse le second obturateur de retour vers le second obturateur à l'aide de la plaque de réflexion.

**7.** Procédé selon la revendication 6, ladite plaque de réflexion étant une plaque de réflexion blanche.

**8.** Procédé selon l'une quelconque des revendications 6 à 7, une bande interdite photonique du filtre accordable utilisant un cristal photonique étant accordée lorsqu'au moins un élément parmi la forme et le volume des cristaux photoniques est modifié à l'aide d'un stimulus électrique ou mécanique commandé par le dispositif de commande.

**9.** Procédé selon la revendication 7 ou 8, ledit filtre accordable utilisant un cristal photonique comprenant :

une couche de cristaux photoniques contenant des particules colloïdales chargées dispersées dans un solvant, et
des électrodes conçues pour appliquer une tension à la couche de cristaux photoniques.

# FIG. 1

FIG. 2

FIG. 3

# FIG. 4

FIG. 5

FIG. 6

# FIG. 7

Li

L'

R    G    B

# FIG. 8

Li

L1

20

30

L2

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009060166 A1
- US 5452113 A